(19) Europäisches Patentamt
European Patent Office
Office européen des brevets

(11) EP 4 205 964 A1

(12) EUROPEAN PATENT APPLICATION

(43) Date of publication:
05.07.2023 Bulletin 2023/27

(21) Application number: 22214772.0

(22) Date of filing: 19.12.2022

(51) International Patent Classification (IPC):
B32B 25/04 (2006.01)     B29D 22/02 (2006.01)
B32B 25/12 (2006.01)     B32B 25/14 (2006.01)
F16F 1/41 (2006.01)

(52) Cooperative Patent Classification (CPC):
B32B 25/042; B29D 22/023; B32B 25/12;
B32B 25/14; F16F 1/41; B32B 2307/3065;
B32B 2605/10

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.12.2021   JP 2021214991

(71) Applicant: Nitta Chemical Industrial Products Co.,
Ltd
Osaka-shi, Osaka 556-0022 (JP)

(72) Inventors:
• AZECHI, Toshio
  Inami-cho, 6751112 (JP)
• SATO, Yoshinori
  Inami-cho, 6751112 (JP)
• SAKAGUCHI, Naoki
  Inami-cho, 6751112 (JP)

(74) Representative: Bandpay & Greuter
30, rue Notre-Dame des Victoires
75002 Paris (FR)

(54) LAMINATED VIBRATION-PROOF RUBBER AND RUBBER MEMBER

(57) A laminated vibration-proof rubber includes: a main shaft; an outer cylinder disposed concentrically with a shaft center of the main shaft; an elastic portion interposed between the main shaft and the outer cylinder, the elastic portion having a configuration in which a plurality of elastic layers and one or a plurality of hard layers are alternately laminated in a radially inner and outer direction with respect to the shaft center; and a covering layer covering at least the elastic layers, in which the elastic layers contain natural rubber as a main component, and the covering layer includes a rubber composition containing isoprene rubber as a main component, and has flame retardancy higher than that of the elastic layers.

FIG. 1

**Description**

BACKGROUND OF THE INVENTION

TECHNICAL FIELD

The present invention relates to a laminated vibration-proof rubber and a rubber member suitably used for vehicles, particularly railway vehicles.

DESCRIPTION OF THE RELATED ART

For example, in a railway vehicle, a laminated vibration-proof rubber is interposed between a truck frame traveling on a rail and an axle side member. In addition, a laminated vibration-proof rubber as a stopper is interposed between an air spring and a truck frame as a displacement assist of the air spring provided between the truck frame and the vehicle body. The laminated vibration-proof rubber includes a main shaft, an outer cylinder disposed concentrically with a shaft center of the main shaft, and an elastic portion interposed between the main shaft and the outer cylinder. This laminated vibration-proof rubber absorbs and relaxes a meander motion of the railway vehicle and an impact during vertical movement.

In recent years, it has been required to improve the flame retardancy of laminated vibration-proof rubber in consideration of occurrence of a fire and the like. As a method for improving the flame retardancy, there is a method in which the rubber material of the elastic portion is blended in a flame retardant manner. For example, an organic flame retardant such as a bromine-based one, or a flame retardant such as a metal oxide is blended with natural rubber (NR). However, organic flame retardants are difficult to employ due to the problem of environmental load, and flame retardants such as metal oxides have a problem in that tensile strength and durability, which are mechanical properties, deteriorate.

In the laminated vibration-proof rubber of US 2017/0267260 A, flame retardancy is imparted by providing a fireproof layer containing a chloroprene rubber (CR) base as a main component on a surface of an elastic portion composed of a conventional rubber material containing a NR base as a main component.

SUMMARY OF THE INVENTION

However, although the laminated vibration-proof rubber of US 2017/0267260 A imparts flame retardancy by the fireproof layer, cold resistance and durability are impaired. That is, in US 2017/0267260 A, since a CR-based rubber having a glass-transition temperature (Tg) of -20°C to -30°C is used as a main component of the fireproof layer and a NR-based rubber having a Tg of -45°C to -50°C is used as a main component of the elastic portion, there is a problem in that a difference in hardness occurs between the fireproof layer and the elastic portion and the fireproof layer and that the elastic portion are easily peeled off when used in a low temperature environment. In addition, in US 2017/0267260 A, in order to bond an elastic portion mainly composed of a NR base and a fireproof layer mainly composed of a CR base, it is necessary to add triallyl isocyanurate (TAIC) or dicumyl peroxide (DCP) to a CR-based rubber, which is a main component of the fireproof layer, and there is a limitation on blending.

Thus, an object of the present invention is to provide a laminated vibration-proof rubber and a rubber member that are excellent in flame retardancy, cold resistance, and durability.

A laminated vibration-proof rubber according to the present invention includes: a main shaft; an outer cylinder disposed concentrically with respect to a shaft center of the main shaft; an elastic portion interposed between the main shaft and the outer cylinder, the elastic portion having a configuration in which a plurality of elastic layers and one or a plurality of hard layers are alternately laminated in a radially inner and outer direction with respect to the shaft center; and a covering layer covering at least the elastic layer, in which the elastic layer includes natural rubber as a main component, and the covering layer includes a rubber composition containing isoprene rubber as a main component, and has flame retardancy higher than that of the elastic layer.

A rubber member according to the present invention includes: an elastic layer containing natural rubber as a main component; and a covering layer provided on a surface of the elastic layer and composed of a rubber composition containing isoprene rubber as a main component, and having flame retardancy higher than that of the elastic layer.

In the present invention, an elastic layer mainly composed of a natural rubber (NR) base is covered with a covering layer mainly composed of isoprene rubber (IR) having higher flame retardancy than the NR base. Since the main component of the elastic layer and the main component of the covering layer are composed of the same kind of rubber component, the elastic layer and the covering layer are closely bonded, and a difference in hardness between the elastic layer and the covering layer hardly occurs in a low temperature environment. Thus, according to the present invention, it is possible to provide a laminated vibration-proof rubber and a rubber member that are excellent in flame retardancy, cold resistance, and durability.

BRIEF DESCRIPTION OF THE DRAWINGS

FIG. 1 is a longitudinal sectional view of a laminated vibration-proof rubber according to an embodiment; and
FIG. 2 is a graph showing a relationship between temperature and hardness of natural rubber and chloroprene rubber.

DETAILED DESCRIPTION

Hereinafter, embodiments of the present invention will be described in detail with reference to the drawings.

1. Embodiments

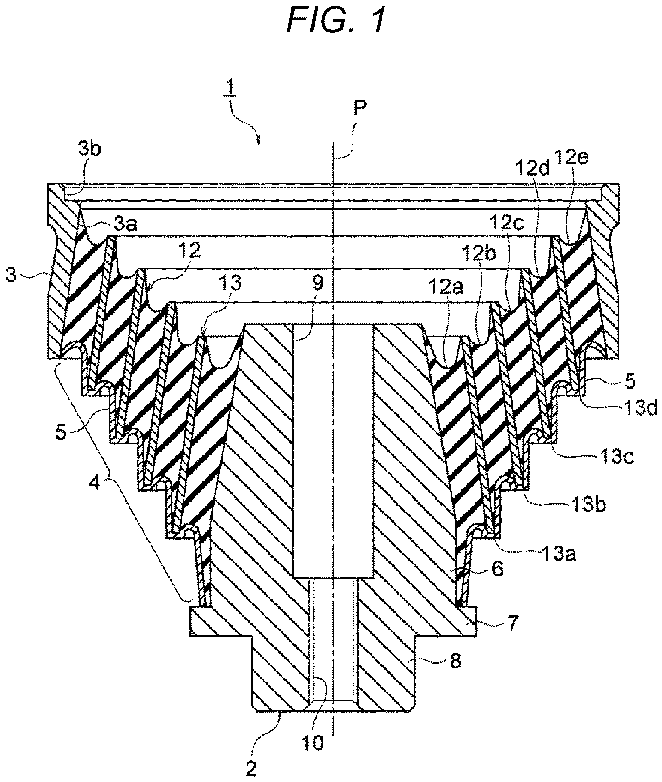

In FIG. 1, a laminated vibration-proof rubber 1 includes a main shaft 2, an outer cylinder 3, an elastic portion 4, and a covering layer 5. The laminated vibration-proof rubber 1 is interposed, for example, between a truck frame and an axle side member of a railway vehicle (not illustrated) or between the truck frame and an air spring, and absorbs and alleviates a meander motion of the railway vehicle and an impact during vertical movement. In the following description, the direction in which the shaft center P of the main shaft 2 extends (the longitudinal direction of the paper surface in FIG. 1) is defined as the vertical direction.

The main shaft 2 is made of metal and formed in a cylindrical shape. The main shaft 2 includes a conical portion 6, a flange portion 7 provided at a lower portion of the conical portion 6, a straight body portion 8 provided at a lower portion of the flange portion 7, a hollow portion 9 that opens an upper end of the conical portion 6, and a screw hole 10 that opens a lower end of the straight body portion 8. The outer peripheral surface of the conical portion 6 is formed of a conical surface having an upwardly tapered shape and a cylindrical surface connected to a lower end of the conical surface. The flange portion 7 and the straight body portion 8 are formed in a cylindrical shape. The diameter of the flange portion 7 is larger than the diameter of the straight body portion 8. The hollow portion 9 is provided in the vertical direction around the shaft center P, and extends to an intermediate position of the cylindrical surface. The screw hole 10 is provided in the vertical direction around the shaft center P, and is connected to the lower end of the hollow portion 9. A lower end portion of the main shaft 2 is attached to a truck frame of a railway vehicle (not illustrated) by a bolt (not illustrated) screwed into the screw hole 10.

The outer cylinder 3 is disposed concentrically with the shaft center P of the main shaft 2. The outer cylinder 3 is made of metal and is formed in a shape of tapered cylinder whose diameter decreases upward. That is, the outer cylinder 3 is inclined inward (radially inward) by a predetermined angle with respect to the shaft center P of the main shaft 2. The inclination angle of the outer cylinder 3 with respect to the shaft center P is not particularly limited, but is set within a range of, for example, 5° to 15°. The outer cylinder 3 has an inclined inner peripheral surface 3a whose diameter decreases upward, and a fitting inner peripheral surface 3b connected to an upper end of the inclined inner peripheral surface 3a. An outer peripheral surface of an elastic layer 12e described later is fixed to the inclined inner peripheral surface 3a. The fitting inner peripheral surface 3b is fitted to a truck frame of a railway vehicle (not illustrated).

The elastic portion 4 includes an elastic body 12 having a plurality of (five in FIG. 1) elastic layers 12a, 12b, 12c, 12d, and 12e formed in an annular shape, and an intermediate hard body 13 having a plurality of (four in FIG. 1) hard layers 13a, 13b, 13c, and 13d formed in an annular shape. The elastic portion 4 has a laminated rubber structure in which the elastic layers 12a, 12b, 12c, 12d, and 12e and the hard layers 13a, 13b, 13c, and 13d are alternately laminated in the radial direction, and is integrally vulcanized and molded together with the main shaft 2 and the outer cylinder 3. That is, the elastic portion 4 has a configuration in which the plurality of elastic layers 12a, 12b, 12c, 12d, and 12e and one or the plurality of hard layers 13a, 13b, 13c, and 13d are alternately laminated in the radially inner and outer direction with respect to the shaft center P, and is interposed between the main shaft 2 and the outer cylinder 3.

The elastic body 12 (elastic layers 12a, 12b, 12c, 12d, and 12e) contains natural rubber (NR) as a main component. As the rubber material constituting the elastic body 12, for example, a rubber compound used as an existing vibration-proof rubber can be used. In FIG. 1, the elastic body 12 has a configuration in which the elastic layers 12a, 12b, 12c, 12d, and 12e are arranged in this order from the inside to the outside in the radial direction. The upper end surface and the lower end surface of each of the elastic layers 12a to 12e are concave curved surfaces in order to avoid stress concentration.

The intermediate hard body 13 (hard layers 13a, 13b, 13c, and 13d) is made of metal. In FIG. 1, the intermediate hard body 13 has a configuration in which the hard layers 13a, 13b, 13c, and 13d are arranged in this order from the inside to the outside in the radial direction.

The elastic layers 12a to 12e and the hard layers 13a to 13d are formed in a tapered cylindrical shape whose diameter decreases upward. That is, the elastic layers 12a to 12e and the hard layers 13a to 13d are inclined inward (radially inward) by a predetermined angle with respect to the shaft center P of the main shaft 2. In the present embodiment, the inclination angles of the elastic layers 12a to 12e and the hard layers 13a to 13d with respect to the shaft center P are set to the same angle (within the range of 5° to 15°) as the inclination angle of the outer cylinder 3, but the inclination angles are not limited thereto.

In the elastic portion 4 configured as described above, the inner and outer peripheral surfaces of each of the elastic layers 12a to 12e are fixed by vulcanization adhesion to the outer peripheral surface (conical surface and cylindrical surface) of the main shaft 2, the inclined inner peripheral surface 3a of the outer cylinder 3, or the inner and outer peripheral surfaces of the adjacent hard layers 13a to 13d. Specifically, the inner peripheral surface of the elastic layer 12a, which is the innermost layer of the elastic portion 4, is fixed to the outer peripheral surface of the main shaft 2, and the outer peripheral surface of the elastic layer 12a is fixed to the inner peripheral surface of the hard layer 13a. The inner peripheral surface of the elastic layer 12e, which is the outermost layer of the elastic portion 4, is fixed to the outer peripheral surface of the hard layer 13d, and the outer peripheral surface of the elastic layer 12e is fixed to the inclined inner peripheral surface 3a of the outer cylinder 3. As for the elastic layers 12b to 12d, which are intermediate layers of the elastic portion 4, the elastic layer 12b is fixed to the hard layer 13a and the hard layer 13b, the elastic layer 12c is fixed to the hard layer 13b and the hard layer 13c, and the elastic layer 12d is fixed to the hard layer 13c and the hard layer 13d.

The elastic layers 12a to 12e may have a constant thickness along the vertical direction, or may have partially different thicknesses. In FIG. 1, the thickness of the elastic layer 12a is set so as to indicate a maximum value at the upper portion, gradually decrease from the upper portion to the lower portion, and indicate a minimum value at the lower portion. The thicknesses of the elastic layers 12b to 12e are constant along the vertical direction.

The covering layer 5 is provided so as to cover at least the elastic body 12 (elastic layers 12a to 12e). In FIG. 1, the covering layer 5 is provided so as to cover the lower end surface of the elastic portion 4 (the lower end surface of the elastic body 12 and the lower end surface of the intermediate hard body 13). The covering layer 5 may be provided so as to cover not only the lower end surface of the elastic portion 4 but also only the upper end surface of the elastic portion 4 or the upper end surface and the lower end surface of the elastic portion 4. The covering layer 5 may be provided on at least the surfaces of the elastic layers 12a to 12e.

The covering layer 5 contains isoprene rubber (IR) as a main component, and has flame retardancy higher than that of the elastic layers 12a to 12e (elastic body 12). The covering layer 5 meets the European Norm EN 45545-2, which defines requirements on the combustion behavior of materials and parts used in railway vehicles, and specifically exhibits excellent flame retardancy even in a heat generation test according to ISO 5660-1. The covering layer 5 is preferably composed of a rubber composition containing a rubber component including 50 mass% or more of isoprene rubber having a cis-1,4 bonding amount of 95% or more, and 120 parts by mass or more of magnesium hydroxide and/or aluminum hydroxide with respect to 100 parts by mass of the rubber component. As a blend of the rubber composition constituting the covering layer 5, a blend described in JP 2020-070306 A can be used.

2. Production method

An example of a method for producing the laminated vibration-proof rubber 1 will be described below. First, an IR-based rubber composition is prepared according to a compounding formulation described in JP 2020-070306 A. This rubber composition is poured into a covering layer precursor molding mold, and heated and vulcanized to mold a covering layer precursor.

Next, the covering layer precursor, the main shaft 2, the outer cylinder 3, and the intermediate hard body 13 (plurality of hard layers 13a, 13b, 13c, and 13d) are placed in a laminated vibration-proof rubber molding die. After the mold reaches a predetermined temperature, the NR-based unvulcanized rubber is supplied into the mold, and vulcanization molding is performed. Here, at the interface between the unvulcanized rubber and the covering layer precursor, the vulcanization reaction between the natural rubbers is promoted. The concentration of the vulcanizing agent in the covering layer precursor is lower than the concentration of the vulcanizing agent in the unvulcanized rubber because the vulcanizing agent is consumed when the covering layer precursor is molded. Since the unvulcanized rubber and the covering layer precursor have a large inclination in the concentration of the vulcanizing agent, the vulcanizing agent flows from the unvulcanized rubber having a high concentration to the covering layer precursor having a low concentration and is fused to be firmly bonded by performing vulcanization molding. As described above, the laminated vibration-proof rubber 1 can be manufactured.

3. Action and effect

The laminated vibration-proof rubber 1 is excellent in flame retardancy because the elastic body 12 (elastic layers 12a to 12e) mainly composed of the NR base is covered with the covering layer 5 mainly composed of the IR-based material having flame retardancy higher than that of the NR-based material. In addition, since the main component of the elastic body 12 and the main component of the covering layer 5 are composed of the same kind of rubber component, the ease of fitting of the interface between the elastic body 12 and the covering layer 5 in the vulcanization process is improved, the elastic body 12 and the covering layer 5 are closely bonded, which provides excellence in durability. Furthermore, the glass-transition temperature (Tg) of NR, which is the main component of the elastic body 12, and IR, which is the main component of the covering layer 5, is -45°C to -50°C, and a difference in hardness between the elastic body 12 and the covering layer 5 hardly occurs, which provides excellence in cold resistance.

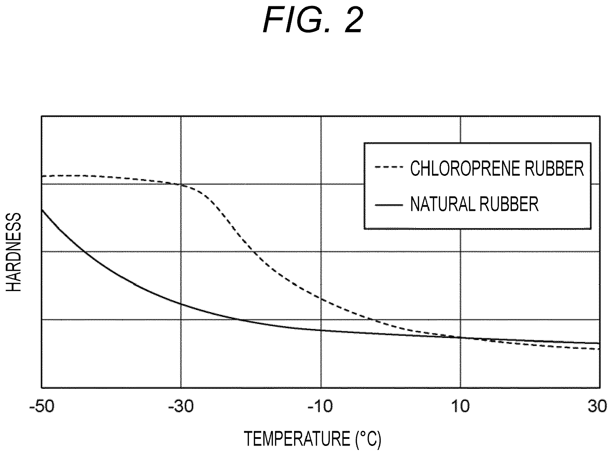

Here, FIG. 2 is a graph showing the relationship between the temperature and hardness of NR (natural rubber) and CR (chloroprene rubber). Although not illustrated in FIG. 2, a graph for IR (isoprene rubber) is similar to that for NR. The hardness is measured by a type A durometer conforming to Japanese Industrial Standards JIS K 6253. As shown in FIG. 2, when compared with CR having a Tg of -20°C to -30°C lower than that of NR (IR), NR (IR) has a small increase in hardness to a lower temperature and maintains flexibility. For example, when the covering layer is composed of CR as the main component as described in US 2017/0267260 A, the flexibility of the covering layer is impaired as the temperature decreases, and a difference in hardness occurs between the elastic body and the covering layer. When a difference in hardness occurs between the elastic body and the covering layer, a load applied to an interface between the covering layer and the elastic body increases, which causes the covering layer to easily peel off from the elastic body. On the other hand, in the laminated vibration-proof rubber 1, the main component of the elastic body 12 and the main component of the covering layer 5 are composed of the same type of rubber component, and the elastic body 12 and the covering layer 5 have the same flexibility even when the temperature to be used decreases, so that the load applied to the interface between the elastic body 12 and the covering layer 5 can be suppressed.

Since the laminated vibration-proof rubber 1 is imparted with flame retardancy by the covering layer 5, it is not necessary to add a flame retardant to the elastic body 12, which makes it possible to suppress deterioration of mechanical characteristics of the elastic body 12. When a large amount of the flame retardant is added to the elastic body to the extent that the flame retardancy is sufficient to produce the laminated vibration-proof rubber, the tensile strength and durability, which are mechanical properties, deteriorate.

The covering layer 5 may not contain a co-cross-linking agent or an organic peroxide cross-linking agent. Examples of the co-cross-linking agent include triallyl isocyanurate (TAIC), ethylene glycol dimethacrylate, diethylene glycol dimethacrylate, and trimethallyl isocyanurate. Examples of the organic peroxide cross-linking agent include dicumyl peroxide (DCP) and $\alpha,\alpha'$-(t-butylperoxy)diisopropylbenzene (Peroximon F-40 manufactured by NOF CORPORATION). For example, when the covering layer is composed of a CR-based rubber as a main component, the interface between the NR-based elastic portion and the CR-based covering layer is not fit, which causes the CR-based covering layer to easily peel off from the NR-based elastic portion. Therefore, it is necessary to improve the adhesiveness between the covering layer and the elastic portion by using the co-cross-linking agent or the organic peroxide cross-linking agent described above (see US 2017/0267260 A). On the other hand, in the laminated vibration-proof rubber 1, since the elastic body 12 and the covering layer 5 are closely bonded to each other, the covering layer 5 can be blended without containing a co-cross-linking agent or an organic peroxide cross-linking agent. In addition, since the elastic body 12 does not contain an organic flame retardant such as a bromine-based flame retardant, the load on the environment can be suppressed.

The laminated vibration-proof rubber 1 is an example of a rubber member including an elastic layer containing natural rubber as a main component and a covering layer provided on a surface of the elastic layer and composed of a rubber composition containing isoprene rubber as a main component having flame retardancy higher than that of the elastic layer. The elastic layer and the covering layer of the rubber member have the same configurations as those of the elastic body 12 (elastic layers 12a to 12e) and the covering layer 5 of the laminated vibration-proof rubber 1. Therefore, the rubber member has the same action and effect as those of the laminated vibration-proof rubber 1, that is, excellent in flame retardancy, cold resistance, and durability. The rubber composition constituting the covering layer of the rubber member preferably contains a rubber component containing 50 mass% or more of isoprene rubber having a cis-1,4 bonding amount of 95% or more, and 120 parts by mass or more of magnesium hydroxide and/or aluminum hydroxide with respect to 100 parts by mass of the rubber component. The rubber member is suitable for vehicles (particularly, railway vehicles).

4. Examples

Hereinafter, the present invention will be described in more detail based on Examples, but the present invention is not limited only to these Examples.

(Preparation of Rubber Composition)

Three types of rubber compositions A, B, and C were prepared by blending each component with 100 parts by mass of the rubber component according to the blending formulation in Table 1 and by kneading the blend with an ordinary Banbury mixer. Each component described in Table 1 is shown below. The unit of the blending amount of each component described in the table is relative "parts by mass", and "-" in the table indicates that the component is not blended.

Natural rubber: RSS #3

Isoprene rubber: Trade name "JSR IR 2200" (50 mass% or more of isoprene rubber having a cis-1,4 bonding amount of 95% or more), manufactured by JSR Corporation
Carbon black: Trade name "SEAST V", manufactured by Tokai Carbon Co., Ltd.
Zinc oxide: Trade name "Zinc White No. 3", Mitsui Mining & Smelting Corporation
Antiaging agent: Trade name "Antigen 6C", manufactured by Sumitomo Chemical Co., Ltd.
Magnesium hydroxide: Trade name "KISMA 5A", manufactured by Kyowa Chemical Industry Co., Ltd.
Aluminum hydroxide: Trade name "Hydilite H-32", manufactured by Showa Denko K.K.
Sulfur: Oil-treated 150 mesh powder sulfur, manufactured by Tsurumi Chemical Industry Co., Ltd.
Vulcanization promoter: Trade name: "Sanceler 22-C", manufactured by Sanshin Chemical Industry Co., Ltd.

[Table 1]

|  | Rubber composition A | Rubber composition B | Rubber composition C |
|---|---|---|---|
| Natural rubber | - | 100 | 100 |
| Isoprene rubber | 100 | - | - |
| Carbon black | 60 | 45 | 65 |
| Zinc oxide | 5 | 5 | 5 |
| Antiaging agent | 4 | 4 | 4 |
| Magnesium hydroxide | 80 | - | - |
| Aluminum hydroxide | 80 | - | - |
| Sulfur | 2 | 2 | 2 |
| Vulcanization promoter | 1 | 1 | 1 |

(Preparation of Rubber)

Vulcanized rubbers of Examples 1 and 2 and Comparative Examples 1 to 3 were produced using three kinds of rubber compositions A, B, and C. In Example 1, first, the rubber composition A was poured into a mold, and heated and vulcanized at 150°C for 20 minutes to mold a covering layer precursor. After molding the covering layer precursor, the rubber composition B was poured into a mold with the covering layer precursor contained therein, and heated and vulcanized at 150°C for 20 minutes to prepare a vulcanized rubber. Example 1 is a vulcanized rubber in which a covering layer composed of a flame-retardant rubber composition A is provided on a surface of an elastic layer composed of a rubber composition B having low hardness. The amount of the rubber composition A poured into the mold was adjusted so that the thickness of the covering layer was 2 mm. The amount of the rubber composition B poured into the mold was adjusted so that the thickness of the elastic layer was 23 mm. Thus, the thickness of the vulcanized rubber of Example 1 is 25 mm. In Example 2, a vulcanized rubber was prepared in the same manner as in Example 1 except that a rubber composition C having a hardness higher than that of the rubber composition B was used instead of the rubber composition B. That is, Example 2 is a vulcanized rubber in which a covering layer composed of a flame-retardant rubber composition A is provided on a surface of an elastic layer composed of a rubber composition C having high hardness. The amount of the rubber composition C poured into the mold was adjusted so that the thickness of the elastic layer was 23 mm. Thus, the thickness of the vulcanized rubber of Example 2 is 25 mm.
In Comparative Example 1, the rubber composition B was poured into a mold, and heated and vulcanized at 150°C for 20 minutes to prepare a vulcanized rubber. Comparative Example 1 is a vulcanized rubber composed only of the rubber composition B. The amount of the rubber composition B poured into the mold was adjusted so that the thickness of the vulcanized rubber was 25 mm. In Comparative Example 2, a vulcanized rubber was prepared in the same manner as in Comparative Example 1 except that the rubber composition C was used instead of the rubber composition B. Comparative Example 2 is a vulcanized rubber composed only of the rubber composition C. In Comparative Example 3, a vulcanized rubber was prepared in the same manner as in Comparative Example 1 except that the rubber composition A was used instead of the rubber composition B. Comparative Example 3 is a vulcanized rubber composed only of the rubber composition A. The thickness of each vulcanized rubber of Comparative Example 1 to 3 was 25 mm.

<Combustion Performance>

EN 45545-2 defines that the flame retardancy of main rubber members used in railway vehicles is evaluated by a heat generation test by the cone calorimeter method in accordance with ISO 5660-1, and the value of MARHE measured by this method is required to be a predetermined value or less. Specifically, the MARHE value is required to be 90 or less at the hazard levels (HL) 1 and 2, and the MARHE value is required to be 60 or less at the HL3. Therefore, samples of 100 mm × 100 mm × 25 mm were prepared according to ISO 5660-1 for the vulcanized rubbers obtained in Examples and Comparative Examples. The heat generation rate of the above samples was measured under the measurement conditions of a test time of 20 minutes, a measurement interval of 2 seconds, and a radiation amount of 25 kW/m$^2$, and the obtained measurement result was substituted into the following formula (1) to obtain an average rate of heat emission (ARHE), and the maximum value thereof was defined as a maximum average rate of heat emission (MARHE). The integrated value was calculated every two seconds, and the maximum value of ARHE was set as MARHE. The combustion performance was evaluated based on the MARHE value. The results are shown in Table 2.
[Mathematical formula 1]

$$ ARHE\ (t_n) = \frac{\sum_{2}^{n} (t_n - t_{n-1}) \times \frac{\dot{q}_n + \dot{q}_{n-1}}{2}}{t_n - t_1} \qquad (1) $$

$t_n$:      measurement time
$t_{n-1}$:   measurement time 2 seconds before $t_n$ seconds
$t_1$:      measurement start time (ti = 0)
$q_n$:      heating rate at $t_n$ seconds
$q_{n-1}$:   heating rate at $t_{n-1}$ seconds

[Table 2]

|  | MARHE value |
|---|---|
| Example 1 | 62 |
| Example 2 | 52 |
| Comparative Example 1 | 241 |
| Comparative Example 2 | 188 |
| Comparative Example 3 | 30 |

It was confirmed from Table 2 that when Examples 1 and 2 were compared with Comparative Examples 1 and 2, Examples 1 and 2, in which the flame-retardant covering layer was provided on the surface of the elastic layer, had a lower MARHE value than Comparative Examples 1 and 2, in which only the elastic layer having no covering layer was formed. Both of Examples 1 and 2 have a MARHE value of less than 90, and have excellent flame retardancy satisfying the requirements of HL1 and 2. Comparing Example 1 with Example 2, it was confirmed that Example 2, in which the elastic layer was the rubber composition C, had a MARHE value lower than that of Example 1, in which the elastic layer was the rubber composition B, and satisfied the requirement of HL3. It is found that more excellent flame retardancy is exhibited by using as a material of the elastic layer the rubber composition C having higher hardness than the rubber composition B. Note that Comparative Example 3, in which the rubber composition A having the flame retardancy is formed, is excellent in flame retardancy but the tensile strength and durability, which are mechanical properties, deteriorate.
Although the embodiment has been described above, the present invention is not limited to the above-described embodiment, and can be changed as appropriate within the scope of the gist of the present invention.

Reference Signs List

1: laminated vibration-proof rubber
2: main shaft
3: outer cylinder
4: elastic portion
5: covering layer
12: elastic body
12a, 12b, 12c, 12d, 12e: elastic layers
13: intermediate hard body
13a, 13b, 13c, 13d: hard layers
P: shaft center

**Claims**

1. A laminated vibration-proof rubber comprising:

   a main shaft;
   an outer cylinder disposed concentrically with respect to a shaft center of the main shaft;
   an elastic portion interposed between the main shaft and the outer cylinder, the elastic portion having a configuration in which a plurality of elastic layers and one or a plurality of hard layers are alternately laminated in a radially inner and outer direction with respect to the shaft center; and
   a covering layer covering at least the elastic layer, wherein
   the elastic layer includes natural rubber as a main component, and
   the covering layer includes a rubber composition containing isoprene rubber as a main component, and has flame retardancy higher than that of the elastic layer.

2. The laminated vibration-proof rubber according to claim 1, wherein the rubber composition contains a rubber component including 50 mass% or more of isoprene rubber having a cis-1,4 bonding amount of 95% or more, and 120 parts by mass or more of magnesium hydroxide and/or aluminum hydroxide with respect to 100 parts by mass of the rubber component.

3. A rubber member comprising:

   an elastic layer containing natural rubber as a main component; and
   a covering layer provided on a surface of the elastic layer and composed of a rubber composition containing isoprene rubber as a main component, and having flame retardancy higher than that of the elastic layer.

# FIG. 1

# FIG. 2

Europäisches Patentamt

European Patent Office

Office européen des brevets

## EUROPEAN SEARCH REPORT

Application Number

EP 22 21 4772

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 113 087 979 A (QINGDAO BORUI ZHIYUAN VIBRATION DAMPING TECH CO LTD) 9 July 2021 (2021-07-09) | 1,3 | INV. B32B25/04 B29D22/02 |
| A | * claim 1 * * example 9 * ----- | 2 | B32B25/12 B32B25/14 F16F1/41 |
| Y | WO 2018/046150 A1 (CONTITECH LUFTFEDERSYSTEME GMBH [DE]) 15 March 2018 (2018-03-15) | 1,3 | |
| A | * claims 1,2 * ----- | 2 | |
| A | US 2017/267260 A1 (FROMONT YANN [FR] ET AL) 21 September 2017 (2017-09-21) * claims 1,10 * ----- | 1 | |
| A | JP 2019 074181 A (TOYO TIRE & RUBBER CO) 16 May 2019 (2019-05-16) * claims 1,3 * ----- | 1 | |

TECHNICAL FIELDS
SEARCHED     (IPC)

B32B
B29D
F16F

The present search report has been drawn up for all claims

| Place of search | Date of completion of the search | Examiner |
|---|---|---|
| The Hague | 14 April 2023 | Hillebrand, Gerhard |

EPO FORM 1503 03.82 (P04C01)

## ANNEX TO THE EUROPEAN SEARCH REPORT
## ON EUROPEAN PATENT APPLICATION NO.

EP 22 21 4772

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2023

| Patent document cited in search report | | Publication date | Patent family member(s) | | Publication date |
|---|---|---|---|---|---|
| CN 113087979 | A | 09-07-2021 | NONE | | |
| WO 2018046150 | A1 | 15-03-2018 | DE 102016217333 | A1 | 15-03-2018 |
| | | | WO 2018046150 | A1 | 15-03-2018 |
| US 2017267260 | A1 | 21-09-2017 | CA 2961472 | A1 | 18-09-2017 |
| | | | EP 3220001 | A1 | 20-09-2017 |
| | | | ES 2726723 | T3 | 08-10-2019 |
| | | | FR 3049029 | A1 | 22-09-2017 |
| | | | HU E17161601 | T1 | 29-07-2019 |
| | | | PL 3220001 | T3 | 30-08-2019 |
| | | | TR 201907129 | T4 | 21-06-2019 |
| | | | US 2017267260 | A1 | 21-09-2017 |
| JP 2019074181 | A | 16-05-2019 | JP 7014562 | B2 | 01-02-2022 |
| | | | JP 2019074181 | A | 16-05-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170267260 A
- JP 2020070306 A